# EUROPEAN PATENT SPECIFICATION

(11) **EP 3 935 379 B1**
(45) Date of publication and mention of the grant of the patent: **20.11.2024**
(21) Application number: 20716041.7
(22) Date of filing: 04.03.2020
(51) Int. Cl.: G01N 30/06, G01N 30/88, G01N 30/34

(54) **SOLVENT FOR GAS CHROMATOGRAPY MASS SPECTOMETRY, AND METHOD FOR DETERMINATION OF FLUORINE-CONTAINING SUBSTANCES ON THE SURFACE OF FLUORORESIN MELT-MOLDED PRODUCTS**
LÖSUNGSMITTEL FÜR GASCHROMATOGRAFIE-MASSENSPEKTROMETRIE UND VERFAHREN ZUR BESTIMMUNG VON FLUORHALTIGEN SUBSTANZEN AUF DER OBERFLÄCHE VON FLUORHARZSCHMELZFORMTEILEN
SOLVANT POUR SPECTROMÉTRIE DE MASSE PAR CHROMATOGRAPHIE EN PHASE GAZEUSE, ET PROCÉDÉ DE DÉTERMINATION DE SUBSTANCES CONTENANT DU FLUOR SUR LA SURFACE DE PRODUITS MOULÉS PAR FUSION DE RÉSINE FLUORÉE

(30) Priority: 05.03.2019 JP 2019040040
(43) Date of publication of application: 12.01.2022
(73) Proprietor: Chemours-Mitsui Fluoroproducts Co., Ltd., Tokyo 105-0001 (JP)
(72) Inventor: YABE, Hiromasa, Shizuoka-Shi, Shizuoka-Ken, Shizuoka 424-0864 (JP); ITAGAKI, Hiroko, Shizuoka-Shi, Shizuoka, Shizuoka 424-8631 (JP)
(74) Representative: Abitz & Partner
(86) International application number: PCT/US2020/020957
(87) International publication number: WO 2020/180968

(56) References cited:
- WO-A1-2010/002024
- WO-A1-2016/093180
- WO-A1-2016/144734
- WO-A1-2018/131327
- MULLER U ET AL: "Gas-Chromatographische Untersuchungen an Perfluorcarbonverbindungen", JOURNAL OF CHROMATOGRAPHY A, ELSEVIER, AMSTERDAM, NL, vol. 147, 11 January 1978 (1978-01-11), Amsterdam, pages 31 - 40, XP026480740, ISSN: 0021-9673, [retrieved on 19780111], DOI: 10.1016/S0021-9673(00)85114-6

## Description

### CROSS-REFERENCE TO RELATED APPLICATIONS

This application claims priority to Japanese patent application no. JP 2019-040040, filed March 05, 2019.

### FIELD OF THE INVENTION

The present invention relates to a solvent for gas chromatography mass spectrometry (GC-MS) of fluorine-containing substances, the solvent comprising a fluorine-containing solvent; a quantitative determination method for fluorine-containing substances contaminating surfaces of fluororesin melt-molded products; and a qualitative analysis method for such fluorine-containing substances based on a gas chromatography mass spectrometry method using the fluorine-containing solvent for gas chromatography mass spectrometry.

### BACKGROUND

Fluororesins have excellent heat resistance and chemical resistance and can be obtained as a dispersion of fluororesin fine particles by means of emulsion polymerization or suspension polymerization. The fine particles in the fluororesin aqueous dispersion can be dried or further granulated and dried to form a fluororesin powder for molding (fine powder or molding powder), or the fluororesin powder for molding can be further melt-molded to form a molded material in the form of beads or pellets. Various fluororesin molded products can be produced from such beads or pellets by known molding methods such as extrusion molding, injection molding, transfer molding, rotary molding, blow molding, and compression molding.

Various fluororesin molded products which utilize the characteristics of fluororesins are also used in the production of semiconductor devices. As the circuit patterns of semiconductor devices become increasingly fine and dense with high integration and multilayered wiring, the size of surface contaminants that can lead to defects in or failure of semiconductor devices also becomes increasingly small. Therefore, because the materials or processes themselves that are used in the production of semiconductor devices have an increasingly significant impact on the yield and reliability of semiconductor products, the cleaning thereof has become increasingly critical (see "New Edition Silicon Wafer Surface Cleaning Technology", Realize Corporation, published 2000, by Takeshi Hattori).

The surface of fluororesin molded products used in semiconductor production is ordinarily cleaned in order to remove small, e.g., nano-sized, particles (contaminant fine particles) using a dilute aqueous solution of a surfactant, a strong acid, ultrapure water and the like. However, with these methods, cleaning time is undesirably lengthy, and the processing methods, e.g., such as proposed in Japanese Unexamined Patent Application Publication No. H08-005140, cannot be implemented by a simple means because the method requires special equipment. Moreover, it is not easy to remove such contaminant particles from the surface of a fluororesin molded product, and it is difficult to reach a level of cleanliness satisfying the requirements of fluororesin molded products used in semiconductor production.

When small, e.g., nano-sized, particles (contaminant fine particles) adhere to the surface of a fluororesin molded product - in particular, to the liquid contacting portion thereof - the particles can be carried by a chemical liquid used in the semiconductor production device and undesirably deposited on the semiconductor wafer surface, which can cause defects in the circuit pattern of the fine semiconductor device and potential failure of the semiconductor device. The causative substances of nano-sized particles (contaminant fine particles) that cause defects in the circuit pattern of a semiconductor device are numerous and are not limited to a single type, however, fluorine-containing deposits (fluorine-containing substance) adhered to the liquid contacting part of the surface of the fluororesin molded product can be considered one causative substance. Such a causative substance (fluorine-containing substance) is believed to be formed when unstable terminal groups of the fluororesin chains, or the fluororesin itself, in the molten state pyrolyzes and generates a gaseous fluororesin degradation product containing fluorine, which then condenses as fluorine-containing contaminant fine particulate deposits on surfaces of the fluororesin melt-molded product (e.g., as it cools and solidifies subsequent to melt-molding)

Further, a fluorine-containing substance, which is one of the causative substances of fine, e.g., nano-sized, particles, has properties such that, in addition to the amount of adhesion per unit area being very small, the substance typically exhibits high resistance to organic solvents and is difficult to dissolve in organic solvents. Due to the characteristic that the fluorine-containing substance does not dissolve in ultrapure water or ammonia dilutions typically used to clean the tubing of a semiconductor production device, or extraction solvents (e.g., acetone) typically used in gas chromatography mass spectrometry (GC-MS) analysis, there has been no appropriate solvent identified in this field, and it is difficult to analyze the presence or absence of a fluorine-containing substance or to analyze the substance itself.

Document WO 2018/131327 A1 is directed to the establishment of a total ion chromatogram of a fluororesin. Although a solvent is involved in the production process of the fluororesin, the analysis process thereof involves headspace sampling without using a solvent.

### SUMMARY OF THE INVENTION

In light of the circumstances described above, an object of the present invention is to provide a solvent for gas chromatography mass spectrometry (GC-MS) for fluorine-containing substances, the solvent comprising a fluorine-containing solvent; a quantitative determination method for fluorine-containing substances contaminating surfaces of fluororesin melt-molded products; and a qualitative analysis method based on a GC-MS method using the solvent for gas chromatography mass spectrometry in order to enable the determination of the presence or absence of trace amounts of causative substances (fluorine-containing substances) of nano-sized particles (contaminant fine particles) in a melt-molded fluororesin product.

The present invention provides a solvent for gas chromatography mass spectrometry (GC-MS) for fluorine-containing substances according to claim 6.

In one embodiment the present invention is a qualitative analysis method for fluorine-containing substances contaminating a surface of a fluororesin melt-molded product according to claim 3.

In one embodiment the present invention is a fluororesin molded product in which a non-volatile residue of a fluorine-containing substance quantified by the quantitative determination method described above is 20×10⁻⁶ mg/mm² or less.

With the present invention, provided are: the use of a solvent for gas chromatography mass spectrometry for fluorine-containing substances according to claim 1, the solvent comprising a fluorine-containing solvent according to claim 6 and a qualitative analysis method according to claim 3 based on a gas chromatography mass spectrometry (GC-MS) method using the solvent for gas chromatography mass spectrometry, which is used to qualitatively analyze trace amounts of the fluorine-containing substances. The present invention enables the qualitative and quantitative analysis of trace amounts of causative substances (fluorine-containing substances) of fine, e.g., nano-sized, particles (contaminant fine particles).

### DESCRIPTION OF THE DRAWINGS

FIG. 1 is a diagram illustrating the mass-to-charge ratio (m/Z) of an MS spectrum in Example 1.
FIG. 2 is a diagram illustrating the mass-to-charge ratio (m/Z) of an MS spectrum in Example 5.
FIG. 3 is a diagram illustrating the mass-to-charge ratio (m/Z) of an MS spectrum in Example 9.
FIG. 4 is a diagram illustrating the mass-to-charge ratio (m/Z) of an MS spectrum in Example 10.
FIG. 5 is a total ion chromatogram (TIC) in Reference Example 1.
FIG. 6 is a total ion chromatogram (TIC) in Reference Example 2.
FIG. 7 is a total ion chromatogram (TIC) in Reference Example 3.
FIG. 8 is a conceptual drawing for explaining a fluorine-containing material to be analyzed (deposit on an outer surface of an extruder sizing die).

### DETAILED DESCRIPTION

The present invention provides a solvent for gas chromatography mass spectrometry, the solvent comprising a fluorine-containing solvent; a quantitative determination method for fluorine-containing substances contaminating a surface of a fluororesin melt-molded product; and a qualitative analysis method based on a gas chromatography mass spectrometry (GC-MS) method using the solvent for gas chromatography mass spectrometry, which are used to qualitatively and quantitatively analyze trace amounts of causative substances (fluorine-containing substances) adhered to the surface of a fluororesin melt-molded product.

### Solvent for GC-MS Analysis

The solvent for gas chromatography mass spectrometry comprising a fluorine-containing solvent according to the present invention is a solvent for dissolving causative substances (fluorine-containing substances) on the surface of a fluororesin melt-molded product, and the solvent comprises a fluorine-containing solvent. In one non-claimed embodiment, the fluorine-containing solvent is at least one type selected from hydrofluorocarbons, perfluorocarbons, fluorine-containing ethers and fluorine-containing alcohols.

In one non-claimed embodiment hydrofluorocarbon solvent is a saturated or unsaturated compound containing only carbon, fluorine, and hydrogen atoms and having a carbon number of from 3 to 9 and preferably from 4 to 9, wherein at least 50% of all atoms bonded to carbon atoms are fluorine atoms. Examples thereof include saturated hydrofluorocarbons such as tridecafluorooctane, pentadecafluoroheptane, decafluoropentane, pentafluorobutane, pentafluoropropane, and heptafluorocyclopentane, and unsaturated hydrofluorocarbons such as hydrofluoroolefin (HFO) represented by the following general formula (I):

Rf-CH₂CH=CHCH₂-Rf ... (I)

(wherein each Rf is independently a perfluoroalkyl group).

In one non-claimed embodiment decafluoropentane represented by C₅H₂F₁₀ is used as a saturated hydrofluorocarbon. There are many structural isomers of decafluoropentane, and a mixture thereof may be used. According to the invention 1,1,1,2,3,4,4,5,5,5-decafluoropentane, or a mixture of 1,1,1,2,3,4,4,5,5,5-decafluoropentane and another decafluoropentane isomer is used. In one non-claimed embodiment examples of unsaturated hydrocarbons include 2,3,3,3-tetrafluoro-1-propene (HFO-1234yf) and Z-1,1,1,4,4,4-hexafluoro-2-butene (Z-HFO-1336mzzm).

In one non-claimed embodiment perfluorocarbon solvent comprises a saturated or unsaturated compound containing only carbon and fluorine atoms and having a carbon number of from 1 to 9. Examples thereof include completely fluorinated alkanes and cycloalkanes such as tetrafluoromethane, hexafluoroethane, octafluoropropane, decafluorobutane, dodecafluoropentane, tetradecafluorohexane, octafluorocyclobutane, and perfluoromethylcyclohexane, and unsaturated perfluorocarbons such as perfluoroolefin represented by the following general formula II:

CF₂=CFRf .... (II)

(wherein Rf is a perfluoroalkyl group), such as perfluoroheptene, for example. Perfluoroheptene has perfluoro-2-heptene and perfluoro-3-heptene as isomers, and these may be used alone or as a mixture.

In one non-claimed embodiment fluorine-containing ether solvent comprises an ether containing fluorine, and examples thereof include hydrofluoroether (HFE) and perfluoroether (PFE).

In one non-claimed embodiment hydrofluoroethers (HFE) include saturated or unsaturated compounds having ether bonds, and examples thereof include hexafluoroisopropanol, trifluoroethanol, tetrafluoroethanol, pentafluoropropanol, 1,1,1-trifluoroethyl-1,1,2,2-tetrafluoroethyl ether, nonafluorobutylmethyl ether, and alkoxyperfluoroalkene. In one non-claimed embodiment hydrofluoroethers having a carbon number of from 3 to 8 is preferable. In one non-claimed embodiment fluorine-containing alcohols include saturated fluorocarbon compounds having -OH functionality, and examples thereof include hexafluoroisopropanol, trifluoroethanol, tetrafluoroethanol and pentafluoropropanol. In one non-claimed embodiment fluorine-containing alcohols having a carbon number of from 2 to 8 is preferable.

In one non-claimed embodiment HFEs are alkoxyperfluoroalkenes, including methoxyperfluoroalkenes and ethoxyperfluoroalkenes having a carbon number of from 5 to 10, and preferable examples include methoxyperfluoropentene, methoxyperfluorohexene, methoxyperfluoroheptene, methoxyperfluorooctene, ethoxyperfluoropentene, ethoxyperfluorohexene, ethoxyperfluoroheptene, ethoxyperfluorooctene, and mixtures thereof. There are multiple structural isomers of alkoxyperfluoroalkenes, however the structure thereof is not particularly limited. Mixtures thereof may be used, and a structure suited to the object of the present invention can be selected appropriately.

In one non-claimed embodiment, examples include methoxyperfluoroheptene isomers thereof, and mixtures thereof. The following are examples of the structure of methoxyperfluoroheptene, but any of the structures may be used: CF₃(CF₂)₂CF=CFCF(OCH₃)CF₃, CF₃CF₂CF=CF(CF₂)₂(OCH₃)CF₃, CF₃CF₂CF=CFCF(OCH₃)CF₂CF₃, CF₃CF=CFCF(OCH₃)(CF₂)₂CF₃, CF₃CF=CFCF₂CF(OCH₃)CF₂CF₃, CF₃CF₂CF=C(OCH₃)(CF₂)₂CF₃, and CF₃CF₂C(OCH₃)=CFCF₂CF₂CF₃.

Non-claimed examples of HFEs that may be suitably used include Vertrel (registered trademark) Suprion manufactured by Chemours-Mitsui Fluoroproducts Co., Ltd. and Novec (registered trademark) 7200, Novec (registered trademark) 7500, and Novec (registered trademark) 7600 manufactured by Sumitomo 3M Co., Ltd.

Non-claimed examples of perfluoroethers include perfluoro(alkyl)alkyl ethers such as perfluoro(propyl)methyl ether, perfluoro(butyl)methyl ether, perfluoro(hexyl)methyl ether, and perfluoro(butyl)ethyl ether.

The analytical solvent can be selected appropriately in accordance with the type of fluorine-containing contaminant substance to be extracted from a surface of a fluororesin melt-molded product. This is however not part of the claimed subject-matter. The boiling point difference relative to the fluorine-containing substance is preferably large, and the boiling point difference is more preferably not less than 10°C. That is, because the decomposition of the fluorine-containing substance targeted by the analytical solvent of the present invention begins from around 150°C, as described below, the decomposition of the fluorine-containing substance begins when the normal boiling point of the analytical solvent is near 150°C, which may cause a decrease in the non-volatile residue of the fluorine-containing substance and may make quantitative or qualitative analysis difficult. Specifically, the analytical solvent of the present invention is preferably gaseous or liquid at room temperature (20-25°C) and preferably has a normal boiling point that does not destroy the molecular structure of the fluorine-containing substance, and the analytical solvent has a normal boiling point of from 0 to 120°C, preferably from 0 to 70°C, and more preferably 20 to 70°C. In addition, from the perspective of handleability, the normal boiling point is preferably at least 20°C higher than room temperature.

In addition, the analytical solvent of the present invention preferably does not leave the component of the analytical solvent itself behind as an non-volatile residue. The fact that an non-volatile residue of the solvent for gas chromatography mass spectrometry is not left behind is preferable in that a fluorine-containing substance with no impurities can be obtained as an non-volatile residue and that separation from the fluorine-containing substance becomes easy in GC-MS measurements. Even if the fluorine-containing substance is soluble, if the solvent component remains as an non-volatile residue - in the case of propylene glycol methyl ether acetate (PGMEA) or the like, for example - then the component of the PGMEA itself will remain as an non-volatile residue, which is not preferable in that separation from the fluorine-containing substance will be difficult in GC-MS measurements.

From the perspective of the purity of the non-volatile residue described above, according to the invention the analytical solvent of the present invention is 1,1,1,2,3,4,4,5,5,5-decafluoropentane. Fluorine-containing Contaminant Substance to be Analyzed

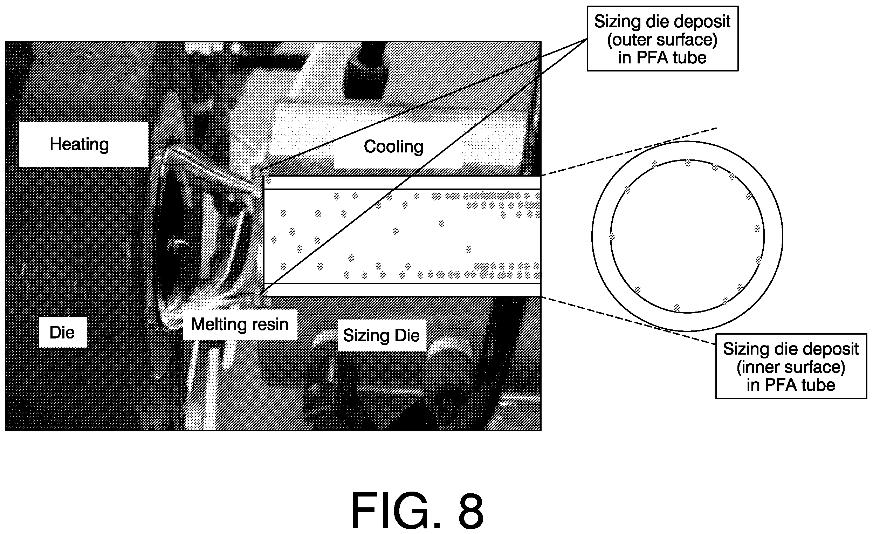

Examples of fluorine-containing contaminant substances to be dissolved in the analytical solvent of the present invention include trace amounts of deposits or the like adhered to the surface (inner or outer surface) of a molded product (e.g., a perfluoroalkoxy resin (PFA) tube in FIG. 8) obtained by melt-molding a fluororesin as illustrated in the conceptual diagram of FIG. 8. Causative substances (fluorine-containing substances) of nano-sized particles (contaminant fine particles), which adhere to the wafer surface in the semiconductor production process and cause defects in the circuit pattern of the fine semiconductor device, tend to adhere to the surface of a fluororesin melt-molded product. Without wishing to be bound by theory, it is believed that such a causative substance (fluorine-containing substance) is formed when unstable terminal groups of the fluororesin chains, or the fluororesin backbone, when the fluororesin is in the molten state, pyrolyzes and generates a gaseous fluororesin degradation product containing fluorine, which then condenses as fine particulate contaminant on surfaces of the fluororesin melt-molded product (e.g., as it cools and solidifies subsequent to melt-molding). This causative substance adheres in a trace amount to the surface of the fluororesin melt-molded product, and because the substance contains fluorine, it is difficult to remove from the surface of the fluororesin melt-molded product.

Such a trace amount of a fluorine-containing substance is a compound that is, in terms of polarity, apolar or moderately polar, has a low molecular weight, starts to decompose at around 150°C, and vaporizes at around 300°C or lower at normal pressure. Such a trace mount of a fluorine-containing substance is a compound which is difficult to dissolve in a solvent typically used in GC-MS analysis such as ammonia, acetone, or purified water, for example. In addition, since the amount is minute, the fluorine-containing substance is not detected even in GC-MS and has been difficult to detect by qualitative and quantitative analysis.

Therefore, quantitative and qualitative analysis becomes possible only by using the quantitative determination method for fluorine-containing substances and the qualitative analysis method for fluorine-containing substances according to the present invention. Further, by using an evaporation and drying step, impurities in the fluorine-containing substance are removed, and the trace amount of fluorine-containing substance is condensed and quantified. In addition, the concentration of the fluorine-containing substance in the analytical specimen obtained when the evaporated and dried fluorine-containing substance is dissolved in the solvent for gas chromatography mass spectrometry according to the present invention can be concentrated to a concentration that can be analyzed by GC-MS analysis.

As a result, it becomes possible to determine the presence or absence of trace amounts of causative substances (fluorine-containing substances) that may cause nano-sized particles (contaminant fine particles), and the generation of nano-sized particles (contaminant fine particles) that cause defects in the circuit pattern of the semiconductor device can be suppressed.

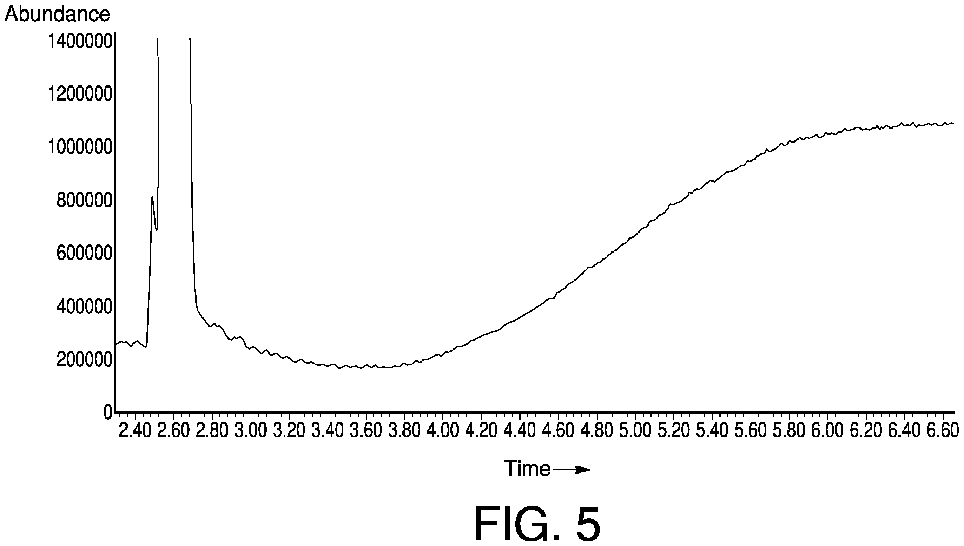

In GC-MS analysis, an extract solution is ordinarily subjected to GC-MS analysis directly for the identification of the extract. In GC-MS analysis, it is generally most likely to GC-MS analyze the extract directly for identification of the extract. However, in the present invention, even if the extract solution is subjected to GC-MS analysis directly, only analytical solvent, 1,1,1,2,3,4,4,5,5,5-decafluoropentane is indicated from the chromatogram, and no GC peaks derived from the extract are detected (see FIGS. 5 to 7; no MS spectra of contaminant fluorine-containing substance can be obtained from these results). In general, it is commonly concluded from such results that no problematic fluorine-containing substance components are contained in the extract solution. However, the present inventors attempted to concentrate the extract solution in order to pursue the possibility that an extract component may be contained in the extract solution. When the object of analysis is a substance other than a fluorine-containing substance, the solvent may be evaporated and concentrated to a concentration of from around 30 to 100 times before use. However, in the case of the trace amount of a fluorine-containing substance in the present invention, nothing would be detected in GC-MS analysis at a concentration of around 30 to 100 times, and quantitative determination would also be extremely difficult. By concentrating the substance to a dry state, which is the ultimate state of concentration, a solid was obtained in an amount - however minute - that can be observed and weighed. Surprisingly, it was found that the solid obtained by this evaporation and drying is soluble in fluorine-containing solvent of the present invention, which is 1,1,1,2,3,4,4,5,5,5-decafluoropentane.

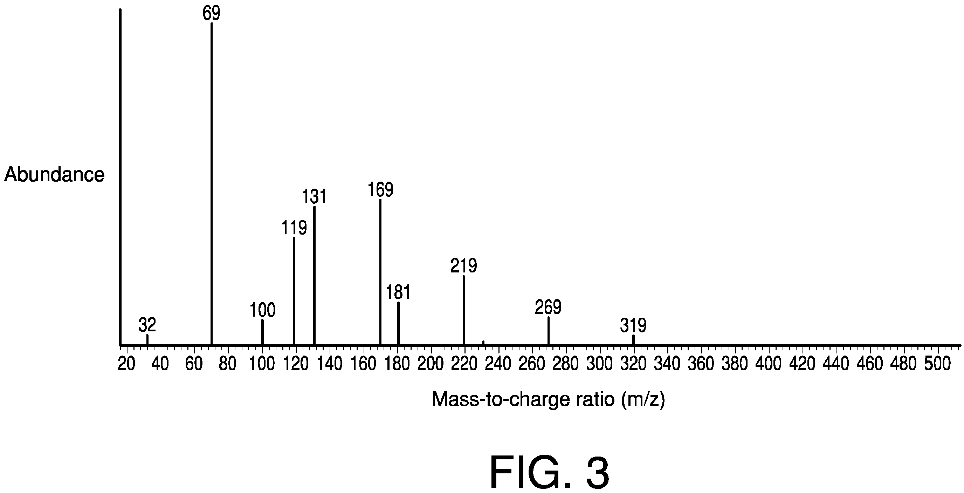

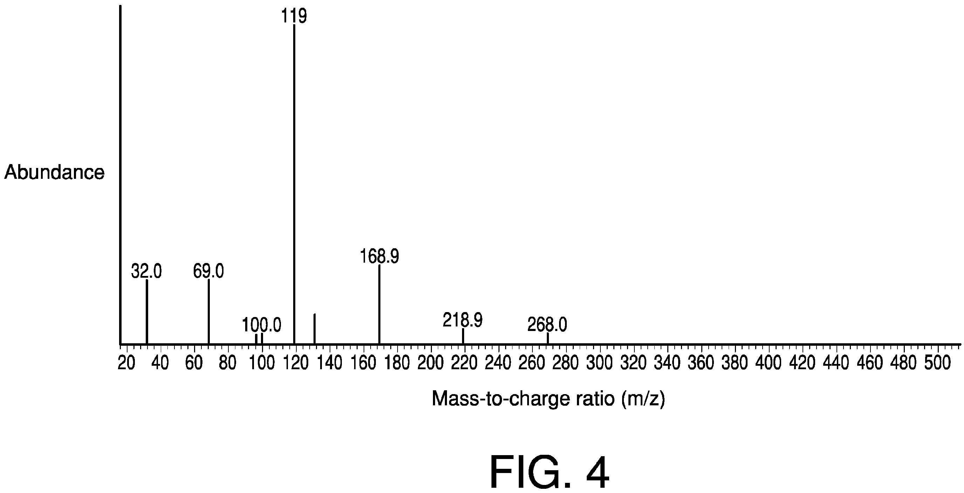

The fluorine-containing substances of the present invention exhibit significant peaks (fragments) in mass spectra at 69 (CF₃), 100 (C₂F₄), 119 (C₂F₅), 131 (C₃F₅), 169 (C₃F₇), 181 (C₄F₇), 219 (C₄F₉), 269 (C₅F₁₁) and the like as a result of the qualitative analysis method of the present invention described below. These peaks are common to the types of peaks of fluorine-containing substance deposits adhered to the inner surface of a sizing die of a melt extruder when performing melt extrusion molding of fluororesins (e.g., tube molding), as is clear from FIG. 3 and FIG. 4 illustrating a mass spectrum of Example 9 and Example 10 described below. It is believed that such substances (i.e., fluorine-containing substances) are formed through thermal decomposition of unstable terminal groups of the fluororesin chains or the fluororesin backbone itself in the molten state, generating gaseous fluororesin degradation products containing fluorine that are deposited as the molten fluororesin cools on the surface of the formed fluororesin melt-molded product. Therefore, a correlation is observed between the amount of the deposit adhered to a portion of the inner and outer surface of the sizing die of the melt extruder and the amount of the fluorine-containing substance adhered to the inner surface of the fluororesin molded product. Reducing the amount of this deposit on the outer surface of the sizing die also makes it possible to suppress the generation of causative substances (fluorine-containing substances) of nano-sized particles (contaminant fine particles) that can cause defects in the circuits of the semiconductor device.

### Quantitative Determination Method

In one non-claimed embodiment, the quantitative determination method for fluorine-containing substances contaminating a surface of a fluororesin melt-molded product includes: dissolving and extracting fluorine-containing substances from a surface of a fluororesin melt-molded product to form an extract solution, evaporating to dryness the extract solution thereby obtaining said fluorine-containing substances as a non-volatile residue; and then determining the quantity of the non-volatile residue. In one non-claimed embodiment, an electronic balance is used for the quantitative determination, and an evaporator is used for evaporation and drying. In a further non-claimed - embodiment, this quantitiative method further comprises pretreatment of the fluororesin melt-molded product prior to said dissolving and extracting step. In one non-claimed embodiment, pretreatment involves contacting the fluororesin melt-molded product with a liquid medium, for the purpose of reducing the quantity of small, e.g., nano-sized, particles (contaminant fine particles of fluorine-containing substances). In some non-claimed embodiments, such liquid medium includes ultrapure water, ammonia dilutions, dilute aqueous solution of a surfactant, a strong acid, ultrapure water, or the like. In some embodiments, such liquid medium includes solvent for gas chromatography mass spectrometry comprising a fluorine-containing solvent, as described earlier.

### Qualitative Analysis Method

In one embodiment, the present invention includes a qualitative analysis method for fluorine-containing substances contaminating a surface of a fluororesin melt-molded product, the method comprising: dissolving and extracting fluorine-containing substances from a surface of a fluororesin melt-molded product to form an extract solution; evaporating to dryness the extract solution thereby obtaining the fluorine-containing substances as a non-volatile residue; dissolving the non-volatile residue in a solvent for gas chromatography mass spectrometry comprising a fluorine-containing solvent as described earlier herein; and subjecting the resultant solution to analysis by gas chromatography mass spectrometry (GC-MS) to obtain a total ion chromatogram (TIC) within a range of a mass number of from 0 to 500 in GC-MS, and performing qualitative analysis from a mass-to-charge ratio (m/Z) of a mass spectrum at each gas chromatograph peak.

Because the gas chromatograph spectrum of the background of the analytical solvent and the spectrum of a fluorine-containing substance can be easily separated for the analysis specimen, it is easy to remove the background component of the solvent from the spectrum of fluorine-containing substances obtained by GC-MS analysis, which is preferable in that more precise qualitative and quantitative analysis is possible.

In some embodiments, the temperature when obtaining an extract solution or an analysis specimen by dissolving and extracting a fluorine-containing substance is not higher than 150°C (e.g., not higher than the temperature at which the present contaminant fluorine-containing substances begin to decompose). In another embodiment, this temperature is from room temperature to 60°C, from the perspective of analytical solvent handleability. When an analytical solvent having a normal boiling point in this temperature range is used, this is preferable in that the analytical solvent is removed by evaporation in a short amount of time, and that the characteristics of the fluorine-containing substance are maintained.

Note that the analysis specimen used in GC-MS analysis in the present invention can also be used after a reference substance is dissolved in the analysis specimen. When decafluoropentane is used as the solvent for GC-MS analysis, isopropanol (IPA) may be used as a reference substance. This is however not claimed. In this case, the component can be qualitatively analyzed from the patterns of the spectrum of a reference solution obtained by dissolving the reference substance in the solvent for mass spectrometry described above and the spectrum of the analysis specimen containing the reference substance. Fluororesin Molded Product

In one embodiment, in the fluororesin molded product of the present invention, the non-volatile residue of the fluorine-containing substance quantified by the quantitative determination method of the present invention is 20×10⁻⁶ mg/mm² or less, or from 0 to 20×10⁻⁶ mg/mm², or preferably from 0.01×10⁻⁶ to 20×10⁻⁶ mg/mm², or more preferably from 0.01×10⁻⁶ to 15×10⁻⁶ mg/mm². In a fluororesin molded product having an non-volatile residue within this range, causative substances (fluorine-containing substances) that cause the generation of nano-sized particles are suppressed. This results in a fluororesin molded product in which the generation of nano-sized particles (contaminant fine particles), which adhere to the wafer surface in the semiconductor production process and cause defects in the circuit pattern of the fine semiconductor device, is also suppressed. The particle size and number of nano-sized particles (contaminant fine particles) can be measured with a particle counter (particle counter in liquid) or the like.

In one embodiment the fluororesin used in the fluororesin molded product of the present invention is tetrafluoroethylene (TFE) homopolymer (PTFE), or a copolymer of a tetrafluoroethylene (TFE) and at least one type of fluorinated monomer (comonomer) that is copolymerizable with TFE, and is preferably a copolymer in which the melt flow rate (MFR) at 372°C is approximately 1 to 100 g/10 min in accordance with ASTM D-1238. The melt flow rate (MFR) can be selected in accordance with the melt-molding method. For example, in melt molding such as melt extrusion molding or injection molding, the melt flow rate is from 1 to 100 g/10 min, preferably from 1 to 50 g/10 min, and more preferably from 1 to 20 g/10 min. In some embodiments, the fluororesin used in the fluororesin molded product comprises a mixture of fluororesins. For example, a mixture of PTFE and PFA, or PTFE and FEP, or PFA and FEP, or a mixture of fluororesins of the same species, e.g., a mixture of at least two different PFA copolymers.

Such a copolymer is a copolymer containing from 40 to 99 mol% of TFE units and from 1 to 60 mol% of at least one type of comonomer. Examples of comonomers include perfluoroalkenes having a carbon number of 3 or higher, perfluoro(alkylvinyl ether) (PAVE) (the alkyl group is a straight-chain or branched alkyl group having a carbon number of from 1 to 5), vinylidene fluoride, and vinyl fluoride.

Examples of preferable TFE copolymers include TFE/hexafluoropropylene (HFP) copolymers (FEP), TFE/perfluoro(alkylvinyl ether) (PAVE) copolymers (PFA), TFE/HFP/PAVE copolymers, and mixtures of these copolymers. More preferably, at least one type of copolymer is selected from TFE/perfluoro(ethylvinyl ether) (PEVE) copolymers, TFE/perfluoro(propylvinyl ether) (PPVE) copolymers, and TFE/perfluoro(butenylvinyl ether) copolymers. The amount of PAVE units in these copolymers is preferably from 1 to 30 mol% and more preferably from 1 to 20 mol%. In addition, the amount of hexafluoropropylene units in an FEP copolymer is preferably from 1 to 10 mol%.

In one embodiment, in order to suppress the generation of pyrolysates which contribute to the present fluorine-containing substances as a non-volatile residue, it is also possible to use a (fluorinated, fluorine treated) and thereby more thermally stable copolymer in which unstable chain terminal groups such as -CF=CF₂, -CO₂H, -CF₂CH₂OH, -CONH₂, and -COF are converted to thermally stable -CF₃ chain terminal groups.

Such a polymer may assume any form such as a powder, granulated product of a powder, a granular substance, flakes, pellets, cubes, or beads.

Examples of the fluororesin molded product of the present invention include pellets, beads, bottles, films, tubes, sheets, pipes, fittings for piping, gaskets, O-rings, pumps, valves, filter housings, regulators, and conveying members (wafer carriers).

The molding method of the fluororesin molded product of the present invention is not particularly limited, and a conventionally known molding method may be adopted in accordance with the fluororesin that is used. Examples of molding methods include compression molding, paste extrusion molding, melt compression molding, melt extrusion molding, injection molding, transfer molding, blow molding, rotary molding, lining molding, and film molding.

By using a solvent for GC-MS analysis comprising a fluorine-containing solvent in the qualitative analysis method of the present invention, fluorine-containing substances are easily extracted, which enables more precise qualitative and quantitative analysis of trace amounts of fluorine-containing substances. The present invention makes it possible to obtain a fluororesin molded product in which the generation of nano-sized particles is suppressed by using the qualitative analysis method of the present invention.

In addition, even without using pyro-GC-MS incorporating an expensive heating device (pyrolyzer), precise qualitative and quantitative analysis of trace amounts of fluorine-containing substances, which have been difficult to qualitatively and quantitatively analyze in the past, is possible.

### EXAMPLES

The present invention will be described in further detail hereinafter using examples, but the present invention is not limited to these examples.

Note that the materials and measurement methods used in the examples are as follows.

### Materials

### 1. Fluororesin

(1) PFA (1)
   Tetrafluoroethylene/perfluoroalkylvinyl ether copolymer
   (melting point: 310°C; zeta potential at pH=7: -50 mV)
(2) PFA (2)
   Tetrafluoroethylene/perfluoroalkylvinyl ether copolymer
   (melting point: 263°C; zeta potential at pH=7: -80 mV)

### 2. Fluororesin molded product (PFA tube)

An unstretched tube with an outside diameter of 6.35 mm, an inside diameter of 4.35 mm, and a length of 50 m was obtained at the molding temperature shown in Table 1 or 2 using PFA (1) or (2) and using a φ 30 mm melt extruder with (extrusion molding device manufactured by Pla Giken Co., Ltd.).

### 3. Solvent for GC-MS analysis

(1) 1,1,1,2,3,4,4,5,5,5-Decafluoropentane
   (Vertrel (registered trademark) XF (manufactured by Chemours-Mitsui Fluoroproducts Co., Ltd., normal boiling point: 55°C)
   (expressed as (1) in the tables below)
(2) Methoxyperfluoroheptene: Vertrel (registered trademark) Suprion^{™}
   (manufactured by Chemours-Mitsui Fluoroproducts Co., Ltd., normal boiling point: 110°C)
   (expressed as (2) in the tables below)
(3) Tetradecafluoroheptene
   (manufactured by Chemours-Mitsui Fluoroproducts Co., Ltd., normal boiling point: 75 to 85°C)
   (expressed as (3) in the tables below)

### Example 1

First, 1,1,1,2,3,4,4,5,5,5-decafluoropentane (Vertrel^{®} XF) was sealed in a 50 m fluororesin molded product made of PFA (1) (tube, outside diameter: 6.35 mm, inside diameter: 4.35 mm) by bending both ends by 100 mm and using a plastic band, and after this was left to stand for 24 hours in an oven at 60°C, it was removed using nitrogen gas to form an extract solution. Next, 500 ml of the extract solution was evaporated and dried using an evaporator, and the amount of the non-volatile residue was weighed using an electronic balance as a fluorine-containing substance adhered to the inner surface of the fluororesin molded product (tube). The results are shown in Table 1.

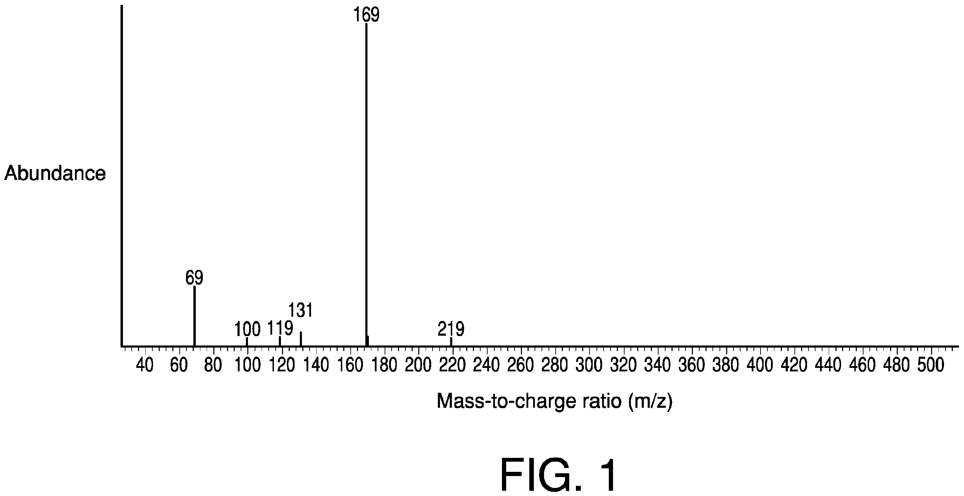

The weighed fluorine-containing substance was dissolved in 500 µl (microliter) of 1,1,1,2,3,4,4,5,5,5-decafluoropentane (Vertrel^{®} XF), which is the solvent for gas chromatography mass spectrometry according to this application, to obtain an analysis specimen. The ratio of fluorine-containing substance and the solvent for gas chromatography mass spectrometry according to this application was 1 mg/10 µl. The obtained analysis specimen was used to obtain a total ion chromatogram (TIC) within a range of a mass number of from 0 to 500 in gas chromatography mass spectrometry (GC-MS), and the mass-to-charge ratio (m/Z) of the spectrum at each peak was then confirmed. The results are shown in FIG. 1.

### Examples 2 to 4

First, the pretreatment solvent shown in Table 2 was sealed in a 50 m fluororesin molded product (tube, outside diameter: 6.35 mm, inside diameter: 4.35 mm) by bending both ends by 100 mm and using a plastic band, and after this was left to stand for 24 hours in an oven at 60°C (pretreatment cleaning), the tube was dried at room temperature using nitrogen gas.

Next, 1,1,1,2,3,4,4,5,5,5-decafluoropentane (Vertrel^{®} XF) was similarly sealed in this dried tube, and after this was left to stand for 24 hours in an oven at 60°C, it was removed using nitrogen gas and stored in a glass vial to form an extract solution. Next, 500 ml of the extract solution was evaporated and dried using an evaporator, and the amount of the non-volatile residue was weighed as a fluorine-containing substance adhered to the surface of the fluororesin molded product (tube). The results are shown in Table 1.

### Example 5

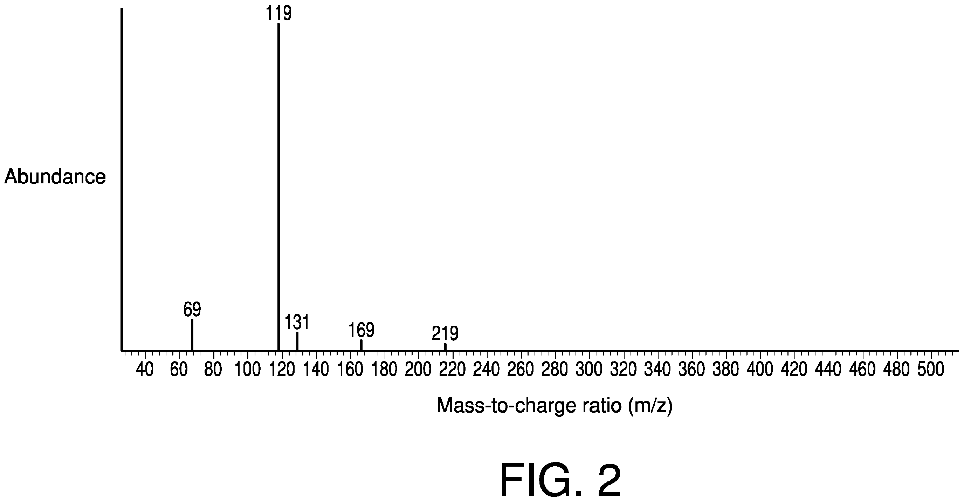

With the exception of using a fluororesin molded product made of PFA (2), the amount of a fluorine-containing substance was weighed using an electronic balance in the same manner as in Example 1, and the mass-to-charge ratio (m/Z) of the spectrum at each peak was then confirmed. The results are shown in Table 2 and FIG. 2.

### Examples 6 to 8

With the exception of using PFA (2) as a fluororesin, the amount of the fluorine-containing substance was weighed using an electronic balance in the same manner as in Examples 2 to 4. The results are shown in Table 2.

### Example 9

With the exception of using 3 mg of a deposit adhered to the outer surface of a sizing die of the φ 30 mm melt extruder used for tube molding in Example 1 as a fluorine-containing substance and dissolving the deposit in 500 µl (microliter) of 1,1,1,2,3,4,4,5,5,5-decafluoropentane (Vertrel^{®} XF) serving as the solvent for gas chromatography mass spectrometry according to the present invention to obtain an analysis specimen, the mass-to-charge ratio (m/Z) of the spectrum at each peak was confirmed in the same manner as in Example 1. The results are shown in FIG. 3.

### Example 10

With the exception of using 3 mg of a deposit adhered to the outer surface of a sizing die of the Φ 30 mm melt extruder used for tube molding in Example 2 as a fluorine-containing substance and dissolving the deposit in 500 µl (microliter) of 1,1,1,2,3,4,4,5,5,5-decafluoropentane (Vertrel^{®} XF) serving as the solvent for gas chromatography mass spectrometry according to the present invention to obtain an analysis specimen, the mass-to-charge ratio (m/Z) of the spectrum at each peak was confirmed in the same manner as in Example 2. The results are shown in FIG. 4

### Reference Examples 1 and 2

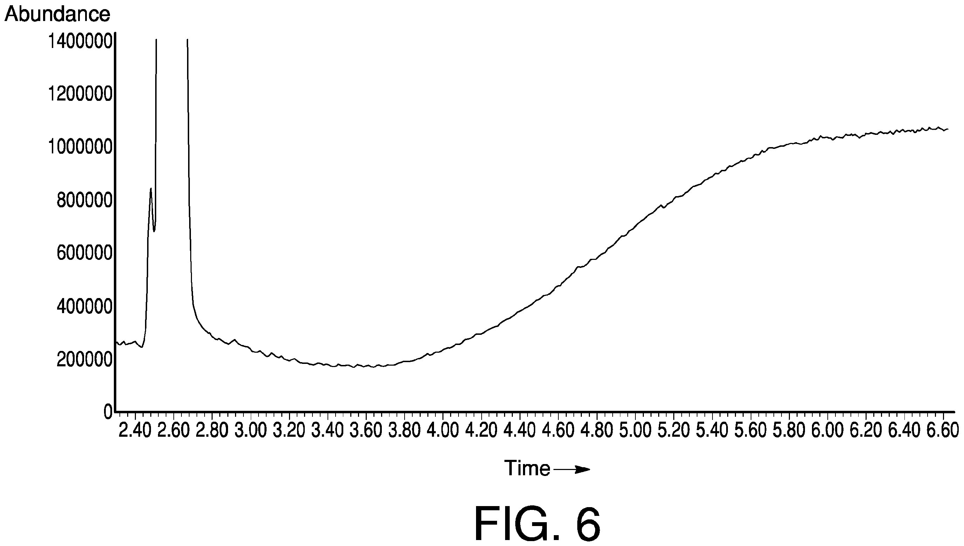

The extract solution of Example 2 or 5 was used to obtain a total ion chromatogram (TIC) within a range of a mass number of from 0 to 650 in gas chromatography mass spectrometry (GC-MS). The results are shown in FIGS. 5 and 6. It can be seen that no peaks (fragments) were observed or detected in GC-MS.

### Reference Example 3

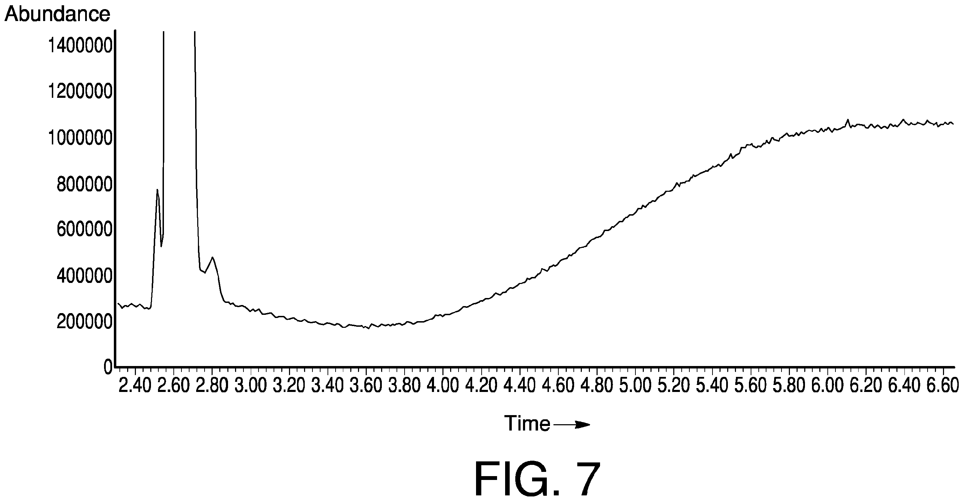

The results of a total ion chromatogram (TIC) for 1,1,1,2,3,4,4,5,5,5-decafluoropentane (Vertrel^{®} XF) serving as the solvent for gas chromatography mass spectrometry according to the present invention are shown in FIG. 7.

It can be seen from a comparison of FIGS. 5 and 6 and FIG. 7 that no peaks (fragments) are confirmed or detected from the total ion chromatogram (TIC) in the extract solution of Example 2 or 5.

### Reference Examples 4 to 8

First, 3 mg of a deposit adhered to the outer surface of the sizing die of the melt extruder used in Example 1 was respectively immersed in 3 g of the solvent for GC-MS analysis shown in Table 3, and this was subjected to ultrasonic treatment for 5 min at room temperature (20°C) and then left to stand for 12 hours. The state after being left to stand was confirmed visually, and cases in which solid matter or sediment could be confirmed were assessed as ×, while cases in which no solid matter or sediment could be confirmed were assessed as ∘. The results are shown in Table 3.

As is clear from FIGS. 1 to 8, the solvent for extraction, the quantitative determination method, and the qualitative analysis method of the present invention yielded the outstanding effect that trace amounts of fluorine-containing substances can be quantified and can also be subjected to qualitative analysis by GC-MS.

In addition, in FIGS. 1 to 4, it can be seen that peaks such as 69 (CF₃), 100 (C₂F₄), 119 (C₂F₅), 131 (C₃F₅), 169 (C₃F₇), 181 (C₄F₇), 219 (C₄F₉), and 269 (C₅F₁₁) can be confirmed as fragment ions of fluorine-containing substances. Therefore, it can be seen that if these common peaks are reduced or eliminated in FIGS. 1 and 2, causative substances of nano-sized particles (contaminant fine particles) originating from fluorine-containing substances which cause defects in the circuit pattern of the semiconductor device can be reduced.

**Table 1**

| | Example 1 | Example 2 | Example 3 | Example 4 |
|---|---|---|---|---|
| Fluororesin | PFA (1) | PFA (1) | PFA (1) | PFA (1) |
| Molding temperature (°C) | 360 | 360 | 360 | 360 |
| Pretreatment solvent | - | Vertrel^{®} XF | 3% NH₄ | PGMEA |
| Pretreatment temperature | - | 60°C | Room temperature | 60°C |
| Pretreatment time | - | 24 hours | 24 hours | 24 hours |
| Solvent for GC-MS analysis | (1) | (1) | (1) | (1) |
| Extraction temperature | 60°C | 60°C | 60°C | 60°C |
| Extraction time | 24 hours | 24 hours | 24 hours | 24 hours |
| Amount of non-volatile residue (mg/mm²) | 0.347x10⁻⁶ | 0.0x10⁻⁶ | 0.054x10⁻⁶ | 0.424x10⁻⁶ |

**Table 2**

| | Example 5 | Example 6 | Example 7 | Example 8 |
|---|---|---|---|---|
| Fluororesin | PFA (2) | PFA (2) | PFA (2) | PFA (2) |
| Molding temperature (°C) | 320 | 320 | 320 | 320 |
| Pretreatment solvent | - | Vertrel^{®} XF | 3% NH₄ | PGMEA |
| Pretreatment temperature | - | 60°C | Room temperature | 60°C |
| Pretreatment time | - | 24 hours | 24 hours | 24 hours |
| Solvent for GC-MS analysis | (1) | (1) | (1) | (1) |
| Extraction temperature | 60°C | 60°C | 60°C | 60°C |
| Extraction time | 24 hours | 24 hours | 24 hours | 24 hours |
| Amount of non-volatile residue (mg/mm²) | 14.4x10⁻⁶ | 6.1x10⁻⁶ | 9.1x10⁻⁶ | 9.0x10⁻⁶ |

**Table 3**

| | Reference Example 4 | Reference Example 5 | Reference Example 6 | Reference Example 7 | Reference Example 8 | Reference Example 9 |
|---|---|---|---|---|---|---|
| Fluororesin | PFA (2) | PFA (2) | PFA (2) | PFA (2) | PFA (2) | PFA (2) |
| Solvent for GC-MS analysis | (2) | (3) | IPA | Acetone | 3% NH4 | Purified water |
| Solubility | ○ | ○ | × | × | × | × |

The present invention enables more precise quantitative determination and qualitative analysis of fluorine-containing substances contaminating a surface of a fluororesin melt-molded product.

By using the quantitative determination method and the qualitative analysis method of the present invention, it becomes possible to determine whether or not nano-sized particles (contaminant fine particles) are generated. Therefore, a fluororesin molded product in which the generation of nano-sized particles (contaminant fine particles) is suppressed can be obtained, and the occurrence of defects in the circuit pattern of a semiconductor device can be suppressed.
In addition, even without using pyro-GC-MS incorporating an expensive heating device (pyrolyzer), precise qualitative and quantitative analysis of trace amounts of fluorine-containing substances, which have been difficult to qualitatively and quantitatively analyze in the past, is possible.

## Claims

1. Use of a solvent comprising a fluorine-containing solvent for gas chromatography mass spectrometry of fluorine-containing substances adhered to a surface of a fluororesin melt-molded product, wherein the fluorine-containing solvent is 1,1,1,2,3,4,4,5,5,5-decafluoropentane.

2. The use according to claim 1, wherein the solvent dissolves the fluorine-containing substances on the surface of the fluororesin melt-molded product.

3. A qualitative analysis method for fluorine-containing substances contaminating a surface of a fluororesin melt-molded product, comprising:
dissolving and extracting fluorine-containing substances from a surface of a fluororesin melt-molded product to form an extract solution,
evaporating to dryness said extract solution thereby obtaining said fluorine-containing substances as a non-volatile residue;
dissolving said non-volatile residue in a solvent for gas chromatography mass spectrometry comprising a fluorine-containing solvent, wherein the fluorine-containing solvent is 1,1,1,2,3,4,4,5,5,5-decafluoropentane, and
subjecting the resultant solution to analysis by gas chromatography mass spectrometry (GC-MS) to obtain a total ion chromatogram (TIC) within a range of a mass number of from 0 to 500 in GC-MS, and performing qualitative analysis from a mass-to-charge ratio (m/Z) of a mass spectrum at each gas chromatograph peak.

4. The method according to claim 3, wherein, after evaporating to dryness said extract solution and prior to dissolving said non-volatile residue in a solvent for gas chromatography mass spectrometry, the quantity of said non-volatile residue is determined.

5. A fluororesin molded product in which the quantity of a non-volatile residue of a fluorine-containing substance determined by the method according to claim 4 is 20×10⁻⁶ mg/mm² or less.

6. A solvent for gas chromatography mass spectrometry of fluorine-containing substances comprising a fluorine-containing solvent, wherein the fluorine-containing solvent is 1,1,1,2,3,4,4,5,5,5-decafluoropentane, wherein the fluorine-containing substance is adhered to a surface of a fluororesin melt-molded product.

## Patentansprüche

1. Verwendung eines Lösungsmittels, das ein fluorhaltiges Lösungsmittel für eine Gaschromatographie-Massenspektrometrie von fluorhaltigen Substanzen umfasst, die an einer Oberfläche eines Fluorharzschmelzformprodukts haften, wobei das fluorhaltige Lösungsmittel 1, 1, 1,2,3,4,4,5,5,5-Decafluorpentan ist.

2. Verwendung nach Anspruch 1, wobei das Lösungsmittel die fluorhaltigen Substanzen auf der Oberfläche des Fluorharzschmelzformprodukts auflöst.

3. Qualitatives Analyseverfahren für fluorhaltige Substanzen, die eine Oberfläche eines Fluorharzschmelzformprodukts verunreinigen, Folgendes umfassend:
Auflösen und Extrahieren fluorhaltiger Substanzen von einer Oberfläche eines Fluorharzschmelzformprodukts, um eine Extraktlösung zu bilden,
Verdampfen der Extraktlösung bis zur Trockne, wodurch die fluorhaltigen Substanzen als ein nichtflüchtiger Rückstand erhalten werden;
Auflösen des nichtflüchtigen Rückstands in einem Lösungsmittel für eine Gaschromatographie-Massenspektrometrie, das ein fluorhaltiges Lösungsmittel umfasst, wobei das fluorhaltige Lösungsmittel 1,1,1,2,3,4,4,5,5,5-Decafluorpentan ist, und
Unterziehen der resultierenden Lösung einer Analyse durch Gaschromatographie-Massenspektrometrie (GC-MS), um ein Gesamtionenchromatogramm (TIC) innerhalb eines Bereichs einer Massenzahl von 0 bis 500 in GC-MS zu erhalten, und Ausführen einer qualitativen Analyse von einem Masse-zu-Ladungs-Verhältnis (m/Z) eines Massenspektrums bei jedem Gaschromatographie-Peak.

4. Verfahren nach Anspruch 3, wobei nach dem Verdampfen der Extraktlösung bis zur Trockne und vor dem Auflösen des nichtflüchtigen Rückstands in einem Lösungsmittel für eine Gaschromatographie-Massenspektrometrie die Menge des nichtflüchtigen Rückstands bestimmt wird.

5. Fluorharzschmelzformprodukt, in dem die Menge eines nichtflüchtigen Rückstands einer fluorhaltigen Substanz, bestimmt durch das Verfahren nach Anspruch 4, 20 × 10⁻⁶ mg/mm² oder weniger beträgt.

6. Lösungsmittel für eine Gaschromatographie-Massenspektrometrie von fluorhaltigen Substanzen, umfassend ein fluorhaltiges Lösungsmittel, wobei das fluorhaltige Lösungsmittel 1,1,1,2,3,4,4,5,5,5-Decafluorpentan ist, wobei die fluorhaltige Substanz an einer Oberfläche eines Fluorharzschmelzformprodukts haftet.

## Revendications

1. Utilisation d'un solvant comprenant un solvant contenant du fluor pour une chromatographie en phase gazeuse couplée à la spectrométrie de masse de substances contenant du fluor adhérant à une surface d'un produit moulé par fusion en fluororésine, dans laquelle le solvant contenant du fluor est le 1,1, 1,2,3,4,4,5,5,5-décafluoropentane.

2. Utilisation selon la revendication 1, dans laquelle le solvant dissout les substances contenant du fluor sur la surface du produit moulé par fusion en fluororésine.

3. Procédé d'analyse qualitative pour des substances contenant du fluor contaminant une surface d'un produit moulé par fusion en fluororésine, comprenant :
la dissolution et l'extraction de substances contenant du fluor d'une surface d'un produit moulé par fusion en fluororésine pour former une solution d'extrait,
l'évaporation jusqu'à siccité de ladite solution d'extrait obtenant ainsi lesdites substances contenant du fluor sous la forme d'un résidu non-volatil ;
la dissolution dudit résidu non-volatil dans un solvant pour une chromatographie en phase gazeuse couplée à la spectrométrie de masse comprenant un solvant contenant du fluor, dans lequel le solvant contenant du fluor est le 1,1,1,2,3,4,4,5,5,5-décafluoropentane, et
la soumission de la solution résultante à une analyse par chromatographie en phase gazeuse couplée à la spectrométrie de masse (GC-MS) pour obtenir un chromatogramme ionique total (TIC) dans une plage d'un nombre de masse de 0 à 500 en GC-MS, et la réalisation d'une analyse qualitative à partir d'un rapport masse sur charge (m/Z) d'un spectre de masse à chaque pic de chromatographie en phase gazeuse.

4. Procédé selon la revendication 3, dans lequel, après évaporation jusqu'à siccité de ladite solution d'extrait et avant dissolution dudit résidu non-volatil dans un solvant pour une chromatographie en phase gazeuse couplée à la spectrométrie de masse, la quantité dudit résidu non-volatil est déterminée.

5. Produit moulé en fluororésine dans lequel la quantité d'un résidu non-volatil d'une substance contenant du fluor, déterminée par le procédé selon la revendication 4, est de 20 × 10⁻⁶ mg/mm² ou moins.

6. Solvant pour une chromatographie en phase gazeuse couplée à la spectrométrie de masse de substances contenant du fluor comprenant un solvant contenant du fluor, dans lequel le solvant contenant du fluor est le 1,1, 1,2,3,4,4,5,5,5-décafluoropentane, dans lequel la substance contenant du fluor adhère à une surface d'un produit moulé par fusion en fluororésine.
